(19) Europäisches Patentamt
European Patent Office
Office européen des brevets

(11) **EP 0 817 309 B1**

(12) **FASCICULE DE BREVET EUROPEEN**

(45) Date de publication et mention de la délivrance du brevet:
**13.03.2002 Bulletin 2002/11**

(51) Int Cl.[7]: **H01Q 3/40**

(21) Numéro de dépôt: **97401235.3**

(22) Date de dépôt: **03.06.1997**

(54) **Système de conformation de faisceau zonal reconfigurable pour une antenne embarquée sur un satellite en orbite et procédé d'optimisation de la reconfiguration**

System zur Steuerung eines rekonfigurierbaren zonalen Bündels einer Antenne auf einem Satellit in der Umlaufbahn und Optimalisierungsverfahren der Rekonfiguration

Reconfigurable zonal beam forming system for an antenna on an orbiting satellite and optimisation procedure for the reconfiguration

(84) Etats contractants désignés:
**DE ES GB IT LU SE**

(30) Priorité: **24.06.1996 FR 9607813**

(43) Date de publication de la demande:
**07.01.1998 Bulletin 1998/02**

(73) Titulaire: **AGENCE SPATIALE EUROPEENNE**
**F-75015 Paris (FR)**

(72) Inventeurs:
• **Jones, Trevor Howard Price**
**2141 AD Vijfhuizen, Haarlemmermeer (NL)**
• **Yarwood, Michael Philip**
**Sawbridgeworth, Herts, CM21 9JX (GB)**
• **Folio, Bénédicte**
**75005 Paris (FR)**
• **Lambrecht, Xavier J. F., Domaine du Cap Verre**
**06200 Mandelieu (FR)**

(74) Mandataire: **Keib, Gérard et al**
**NOVAMARK TECHNOLOGIES,**
**"Anciennement Brevets Rodhain & Porte",**
**IMMEUBLE VICTORIA MICHELET,**
**122, rue Edouard Vaillant**
**92593 Levallois Perret Cedex (FR)**

(56) Documents cités:
**US-A- 4 124 852**        **US-A- 4 980 692**

• **IEEE TRANSACTIONS ON ANTENNAS AND PROPAGATION, vol. 21, no. 6, Novembre 1973, NEW YORK US, pages 864-868, XP002025734 W.A. SANDRIN: "Spatial distribution of intermodulation products in active phased array antennas"**
• **PROCEEDINGS OF THE GLOBAL TELECOMMUNICATIONS CONFERENCE (GLOBECOM), SAN FRANCISCO, NOV. 28 - DEC. 2, 1994, vol. 3 OF 3, 28 Novembre 1994, INSTITUTE OF ELECTRICAL AND ELECTRONICS ENGINEERS, pages 1717-1721, XP000488819 ANGELUCCI A ET AL: "HIGH PERFORMANCE MICROSTRIP NETWORKS FOR MULTIBEAM AND RECONFIGURABLE OPERATION IN MOBILE-RADIO SYSTEMS"**

## Description

L'invention concerne un système de conformation de faisceau zonal reconfigurable pour une antenne embarquée sur un satellite en orbite.

L'invention concerne aussi un procédé d'optimisation de la reconfiguration obtenue par un tel Système.

Les années passées ont vu un développement très important de nouveaux marchés dans les transmissions par satellites, ce pour de nombreuses applications. Ce développement résulte notamment des systèmes dits "Global Information Infrastructure" ("Infrastructure d'Information Globale") et "Global Mobile Communication" ("Communication Globale Mobile), phénomène accentué par l'assouplissement des lois nationales dans certains pays régissant les télécommunications, voire une "dérégulation complète". Le nombre d'opérateurs offrant des services variés a rapidement augmenté et les usagers se sont vus offerts un choix plus complet et une plus grande flexibilité, ce qui a permis d'adapter au mieux les ressources offertes à leurs besoins.

Corrélativement, tenant compte du fait qu'un laps de temps égal à 2 ou 3 ans s'écoule entre un projet de lancement concrétisé par un contrat commercial et la mise sur orbite effective du satellite de télécommunication, et que la durée de vie moyenne d'un tel satellite est typiquement de 12 à 15 ans, il devient nécessaire de faire des projections sur le futur à très long terme.

Ceci implique, pour atteindre une rentabilité suffisante, que le système de télécommunication embarqué soit très flexible. De façon pratique, cela signifie qu'il est nécessaire que la couverture du satellite puisse être modifiée *in situ*, c'est-à-dire en vol orbital.

Si on considère le diagramme de rayonnement de l'antenne en champ lointain, c'est-à-dire l'empreinte du faisceau sur la surface du globe terrestre, on peut caractériser le faisceau par un certain nombre de paramètres : directivité, distribution déterminée, suivant une courbe en deux dimensions, de la puissance émise, etc. Ce sont tous ces paramètres qui doivent pouvoir être modifiés pour que l'on puisse reconfigurer le faisceau à volonté.

Or la conception des satellites conventionnels émettant sur les bandes C, Ka et Ku sont soumises traditionnellement à différentes contraintes qui réduisent la flexibilité sur de nombreux aspects : couverture(s) de faisceaux, plan(s) de fréquence, puissance maximale par canal, etc.

On a naturellement essayé de mettre en oeuvre des dispositifs et/ou procédés permettant de s'affranchir de ces limitations, mais seule une amélioration modeste de la flexibilité a été obtenue, le plus souvent au prix d'un accroissement important de la quantité de matériel embarqué et/ou de la complexité.

Parmi les méthodes proposées dans l'art connu, les plus intéressantes semblent être du type mettant en oeuvre une amplification distribuée à l'intérieur de la section de conformation de faisceau du système d'émission embarqué, système alimentant l'antenne du satellite.

A titre d'exemple non exhaustif, on peut citer deux types de solutions selon l'art connu.

Le premier est décrit dans le brevet US-A-5 115 248 (Antoine Roederer). Il divulgue un dispositif d'alimentation d'antenne multifaisceau. Selon ce brevet, une multitude de faisceaux étroits contigus ("spots") sont générés. Le problème résolu est de produire, simultanément, un bon recouvrement entre faisceaux adjacents et une illumination efficace d'un réflecteur formant antenne d'émission.

Pour ce faire, il est fait appel à des éléments sources se recouvrant pour générer les faisceaux adjacents précités. Plus précisément, dans chaque région de recouvrement, l'élément source est contrôlé par une matrice séparée d'amplificateurs. En entrelaçant les sorties des matrices pour alimenter systématiquement les emplacements, un réseau continu de faisceaux peut être généré.

Cependant cette méthode, si elle permet une reconfiguration certaine du rayonnement émis, présente plusieurs inconvénients. Elle nécessite notamment, comme il vient d'être indiqué, le recours à des matrices multiples, ce qui augmente fortement le coût et la complexité du matériel. En outre, cette approche ne peut être généralisée à la reconfiguration de faisceaux zonaux complexes, sauf à accepter un très fort déséquilibre entre les amplificateurs.

Un autre exemple est décrit dans l'article de Howard H. S. LUH : "A Variable Power Dual Mode Network for Reconfigurable Shaped Beam Antenna", paru dans "IEEE TRANSACTIONS ON ANTENNAS AND PROPAGATION", vol. AP-32, N° 12, décembre 1984.

De façon à générer une amplitude et une excitation de phase variables sur les ports d'alimentation, des dispositifs déphaseurs variables doivent être insérés entre des circuits hybrides pour modifier la répartition de puissance sur des ports de sortie hybrides. Des dispositifs déphaseurs supplémentaires sont utilisés pour régler les phases relatives des voies (voir Fig. 2 : a, b et c, de ce document).

La complexité du réseau augmente lorsqu'augmente le nombre d'alimentations exigeant des excitations variables. En général, de tels systèmes ont été développés pour fonctionner avec des concepts de puissance centralisée. L'augmentation du nombre de déphaseurs dans les voies multiplie les pertes et rend difficile la génération simultanée de faisceaux étroits.

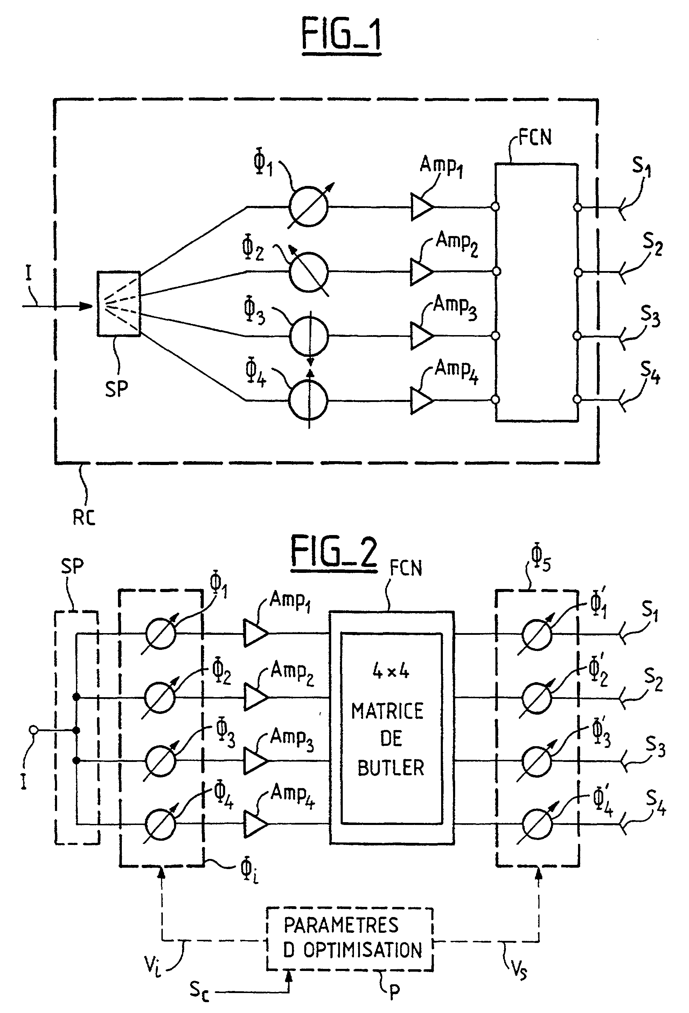

De façon générale, un système selon l'art connu, mettant en oeuvre l'amplification distribuée dans la section de conformation de faisceau, se présente schématiquement comme illustré par la figure 1 annexée à la présente description.

La puissance en entrée I est divisée en signaux d'amplitudes égales par un répartiteur SP suivi de déphaseurs variables, $\Phi_1$ à $\Phi_4$, en supposant, pour fixer les idées, qu'il y ait quatre voies. Les sorties de ces déphaseurs, $\Phi_1$ à $\Phi_4$, sont transmises aux entrées de quatre amplificateurs $Amp_1$ à $Amp_4$, dont les sorties attaquent un réseau de couplage fixe FCN, constitué à base d'une ou plusieurs matrice(s) de Butler. Enfin, les sorties de ce réseau FCN fournissent la puissance d'excitation des éléments sources, $S_1$ à $S_4$, de l'antenne.

Il est donc tout à fait possible d'utiliser cet ensemble, qui constitue un conformateur de premier niveau à matrice de Butler, pour créer et fournir une distribution en amplitude aux éléments sources, $S_1$ à $S_4$.

Ce résultat est certainement obtenu si des signaux déphasés, d'amplitudes égales, sont transmis aux entrées du réseau FCN. Cependant une difficulté apparaît lorsque l'on essaie de reconfigurer le faisceau en un faisceau différent de contour arbitraire.

En effet, si l'on cherche à créer une reconfiguration généralisée et flexible de faisceaux zonaux, il est nécessaire de prévoir une excitation de chaque source, ajustable aussi bien en amplitude et qu'en phase, qui en outre doit satisfaire très précisément des valeurs optimales.

Lorsqu'on utilise des circuits de l'art connu, tels que représentés sur la figure 1, les déphaseurs d'entrée, $\Phi_1$ à $\Phi_4$, peuvent être ajustés de manière à obtenir un appariement en phase satisfaisant pour obtenir le nouveau contour arbitraire désiré. Cependant, il n'est pas possible, dans le cas général d'obtenir simultanément une distribution adéquate d'amplitudes sur les éléments sources et, de ce fait, la reconfiguration a pour résultat une dégradation significative du nouveau faisceau zonal (par rapport à une excitation optimale des éléments sources).

De façon duale, les déphaseurs peuvent être ajustés pour générer une distribution d'amplitudes raisonnable entre les éléments sources par rapport à un optimum désiré (ou valeur cible), mais alors il n'est généralement pas possible d'obtenir une bonne balance de la distribution en phase. Il en résulte également une dégradation significative du faisceau zonal.

Tout en conservant un système conformateur de faisceau du type précité, l'invention se fixe pour but de pallier les inconvénients des dispositifs de l'art connu.

Elle permet d'obtenir, simultanément, une bonne distribution en phases et en amplitudes, et de ce fait une excitation optimisée des éléments sources de l'antenne. Elle permet donc d'obtenir un faisceau zonal reconfigurable composé de faisceaux étroits, fixes ou ajustables.

Pour ce faire, selon une première caractéristique importante de l'invention, on intercale entre le réseau conformateur de premier niveau RC (voir Fig. 1) et les sources d'antennes, $S_1$ à $S_4$ (de façon plus générale $S_x$, avec x nombre entier quelconque), un ensemble de déphaseurs supplémentaires de second niveau.

En ajustant les déphaseurs d'entrée, on peut obtenir une distribution en amplitude raisonnablement équilibrée mais pas tout à fait exacte. En ajustant en outre les déphaseurs de sortie (second niveau), il est possible d'obtenir simultanément la meilleure distribution de phases possible pour les éléments sources.

Cette disposition procure à elle seule un meilleur résultat que celui obtenu par les systèmes selon l'art connu.

Cependant deux problèmes de base subsistent :

1/ Comme il vient d'être indiqué, la balance en amplitude des signaux n'est pas parfaite, il en résulte une dégradation faible mais réelle du faisceau reconfiguré ;

2/ Dans le cas général, il n'existe pas de solution exacte à ce problème, aussi de nombreuses combinaisons de phases des signaux d'entrée procurent des résultats pratiquement similaires, en particulier en tenant compte de toutes les combinaisons possibles d'interconnexions entre les ports d'alimentation des éléments sources et les sorties du réseau de couplage.

On peut naturellement mettre en oeuvre une méthode exhaustive de recherche, mais l'analyse montre que pour des matrices d'ordre élevé, typiquement supérieur ou égal à 8, des temps de calcul très importants deviennent nécessaires, même si on fait appel à des ordinateurs très puissants et très rapides, typiquement de l'ordre d'un ou plusieurs mois. En outre, il n'est pas garanti que l'on aboutisse à la meilleure solution globale.

Aussi, selon une seconde caractéristique importante de l'invention, il est prévu des dispositions permettant d'optimiser le procédé de reconfiguration de faisceau selon l'invention et d'obtenir une convergence rapide vers une solution globale.

Pour ce faire, on remplace le répartiteur fixe d'entrée, délivrant des signaux d'amplitudes égales en puissance, par un réseau de couplage de substitution. Ce réseau d'entrée est identique au réseau "normal" préexistant, à l'exception à l'exception du fait que la matrice de Butler est la matrice inverse de ce dernier réseau. En adoptant cette disposition, il devient possible de trouver immédiatement une solution exacte à la distribution en amplitude des éléments sources. On tire partie d'une propriété du principe d'un transpondeur du type à matrice de Butler. En effet, un signal transmis sur une entrée particulière d'une matrice de Butler sera transmis de façon prévisible sur une sortie unique. Par le principe de superposition, la distribution relative en amplitude des signaux sur les ports de sortie, et donc sur les éléments sources, peut être imposée aux ports d'entrée.

Cependant, de façon générale, cette disposition conduit à un déséquilibre important entre les amplificateurs. En opérant une rotation de phases relative des signaux d'entrée, un déséquilibre minimal peut être obtenu. A la fin du processus, l'erreur dans l'excitation des éléments sources est nulle et le minimum de déséquilibre précité obtenu. Par ce procédé toutes les combinaisons possibles d'interconnexions d'éléments de sources peuvent être rapidement évalué, contrairement à l'art connu. En définissant des fonctions d'erreurs comme explicité ci-après et en lançant un algorithme de recherche de gradient, l'erreur globale la plus faible (c'est-à-dire déséquilibre des amplificateurs et erreur d'excitation d'alimentation) peut alors être trouvée. Lors d'une phase ultime, le réseau de substitution est retiré. Les atténuateurs sont ajustés conformément aux valeurs déterminées lors des phases précédentes.

L'invention a donc pour objet un système de conformation de faisceau zonal reconfigurable pour une antenne embarquée sur un satellite en orbite, présentant un nombre $N$ déterminé de voies, comprenant au moins un répartiteur d'entrée divisant un signal d'entrée en $N$ signaux d'amplitudes égales appliqués aux $N$ voies, un premier ensemble de déphaseurs variables, dits d'entrée, et un ensemble d'amplificateurs de signaux, chaque voie comprenant un déphaseur et un amplificateur disposés en cascade, une première matrice de Butler à $N$ entrées et $N$ sorties, et $N$ éléments sources de rayonnement, l'ajustement des phases des $N$ déphaseurs dits d'entrée à une valeur de phase déterminée permettant d'obtenir ladite reconfiguration du diagramme de rayonnement de l'antenne, caractérisé en ce qu'il comprend, en outre, un second ensemble de $N$ déphaseurs variables, dits de sortie, un de ces déphaseurs variables étant disposé entre chacune desdites sorties de la matrice de Butler et chacun desdits éléments sources de l'antenne, l'ajustement relatif des déphasages introduits par lesdits déphaseurs d'entrée et des déphaseurs de sortie permettant d'obtenir une distribution équilibrée en amplitude des signaux d'excitation desdits éléments sources de rayonnement, nécessaire à ladite reconfiguration.

L'invention a encore pour objet un procédé d'optimisation de la reconfiguration obtenue par un tel système.

L'invention intéresse plus particulièrement, bien que non exclusivement les satellites de télécommunication du type géostationnaire.

L'invention sera mieux comprise et d'autres caractéristiques et avantages apparaîtront à la lecture de la description qui suit en référence aux figures annexées, et parmi lesquelles :

- La figure 1 illustre un exemple de système conformateur de faisceau selon l'art connu ;
- La figure 2 illustre un exemple de système de conformation de faisceau zonal reconfigurable pour une antenne embarquée sur un satellite en orbite selon un premier mode de réalisation de l'invention ;
- La figure 3 illustre une variante de ce système de conformation de faisceau zonal reconfigurable pour une antenne embarquée sur un satellite en orbite ;
- Les figures 4a à 4c illustrent des exemples de configurations de matrices de Butler utilisables dans le cadre de l'invention ;
- La figure 5 illustre un exemple de système de conformation de faisceau zonal reconfigurable pour une antenne embarquée sur un satellite en orbite permettant d'expliciter le procédé d'optimisation la reconfiguration de faisceau selon l'invention ;
- La figure 6 est un organigramme illustrant schématiquement les étapes possibles du procédé complet d'optimisation selon l'invention et les alternatives de ce procédé.

La figure 2 illustre un exemple de système de conformation de faisceau zonal reconfigurable pour une antenne embarquée sur un satellite en orbite, selon un premier mode de réalisation de l'invention. Pour fixer les idées, on suppose que le nombre d'éléments sources est égal à quatre.

Il reprend l'architecture globale du système selon l'art connu illustré par la figure 1 : un répartiteur d'entrée SP (délivrant des signaux de sortie d'amplitudes égales), un ensemble de déphaseurs d'entrée ajustables $\Phi_i$ ($\Phi_1$ à $\Phi_4$), un ensemble d'amplificateurs $Amp_1$ à $Amp_4$, une matrice de Butler d'ordre quatre FCN et des éléments sources $S_1$ à $S_4$. Tous ces circuits jouent le même rôle que les organes correspondants de la figure 1 et il est inutile de les redécrire.

Comme il a été signalé, selon une première caractéristique importante de l'invention, on intercale entre la matrice de Butler FCN et les éléments sources, $S_1$ à $S_4$, un ensemble supplémentaire de déphaseurs de sortie ajustables, $\Phi_s$, à savoir quatre déphaseurs $\Phi'_1$ à $\Phi'_4$ dans l'exemple illustré sur la figure 2. Naturellement, étant disposé dans la chaîne de circuits en amont des amplificateurs, $Amp_1$ à $Amp_4$, il s'agit de déphaseurs haute puissance, contrairement aux déphaseurs d'entrée $\Phi_1$ à $\Phi_4$.

En général, le nombre $Na$ d'amplificateurs est égal au nombre de ports d'entrée $Np$ du réseau de couplage (matrice de Butler) et égal à ou plus grand que le nombre d'éléments sources $Nf$ contribuant au rayonnement de l'antenne ($Na \geq Nf$). Le nombre $Npsh$ de déphaseurs est égal au nombre $Np$ de ports de sortie et d'entrée du coupleur $(Npsh = Np = Na)$.

En ajustant les phases relatives entre les déphaseurs d'entrée $\Phi_i$ et les déphaseurs de sortie $\Phi_s$, la distribution

en amplitude au niveau des éléments sources $S_1$ à $S_4$ peut être modifiée, de telle manière que l'on puisse obtenir approximativement l'amplitude d'excitation nécessaire à la reconfiguration du faisceau zonal. Pour ce faire, le système dispose d'un dispositif de commande P appliquant des paramètres d'optimisation aux deux séries de déphaseurs. Ces paramètres proviennent d'un calcul effectué soit à bord du satellite lui-même (si celui-ci dispose de moyens de calcul), soit d'une station terrestre de contrôle qui transmet des ordres au satellite. Dans les deux cas, des signaux de commande $S_c$ sont transmis au dispositif de commande P pour l'application des paramètres d'optimisation. De façon pratique, le dispositif P peut être réalisé à l'aide de circuits électroniques classiques traduisant les ordres reçus (signaux de commande $S_c$) en deux séries de signaux, $V_i$ et $V_s$, appliqués aux déphaseurs d'entrée $\Phi_i$ et aux déphaseurs de sortie $\Phi_s$, respectivement. Ces signaux ajustent les points de fonctionnement de ces déphaseurs, $\Phi_i$ et $\Phi_s$, de manière à obtenir l'optimisation précitée.

Cependant, on constate que l'excitation correcte en phase conduit généralement à une perte de directivité de l'antenne quantifiable par rapport à l'optimum. Par contre, tous les amplificateurs, $Amp_1$ à $Amp_4$, travaillent exactement au même point de fonctionnement et, donc, à leur efficacité maximale.

Si on introduit une atténuation limitée avant chaque amplificateur, $Amp_1$ à $Amp_4$, on introduit aussi une erreur en ce qui concerne le point de fonctionnement de ces amplificateurs. Cependant, un ajustement optimisé de l'atténuation permet de réduire l'erreur d'amplitude d'excitation au niveau des éléments sources.

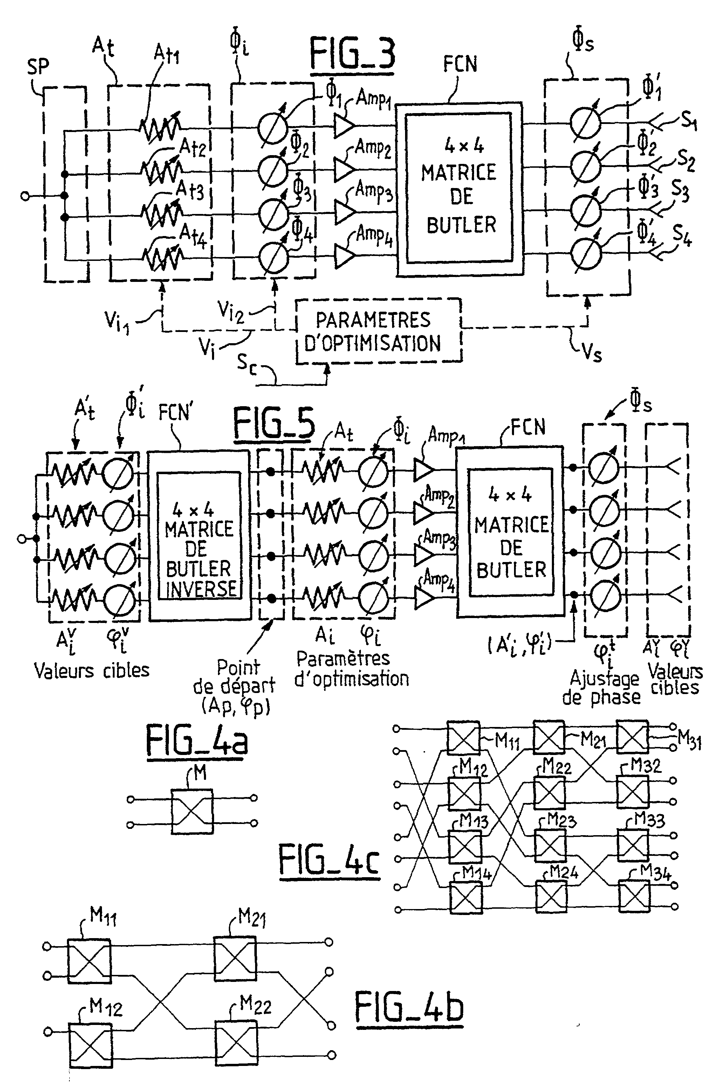

La figure 3 illustre une telle disposition. On retrouve tous les organes et circuits de la figure 2 qu'il est inutile de redécrire. Dans ce mode de réalisation, on a introduit, en série avec chaque déphaseur, $\Phi_1$ à $\Phi_4$, des atténuateurs ajustables $A_t$ ($A_{t1}$ à $A_{t4}$). Les signaux de commande d'entrée $V_i$, délivrés par le dispositif P, sont scindés en deux séries de signaux : $V_{i1}$ commandant le point de fonctionnement des atténuateurs $A_{t1}$ à $A_{t4}$, et $V_{i2}$ commandant, comme précédemment le point de fonctionnement des déphaseurs de premier niveau ou d'entrée, $\Phi_1$ à $\Phi_4$.

Les dispositions prises procurent à elles seules un meilleur résultat que celui obtenu par les systèmes selon l'art connu. Cependant, ce résultat peut encore être amélioré en optimisant les points de fonctionnement des divers organes constitutifs du système.

Pour optimiser les performances globales, il est nécessaire de considérer ensemble l'erreur introduite au niveau du point de fonctionnement des amplificateurs, qui sera appelée ci-après $F_2$, l'erreur d'excitation au niveau des éléments sources, qui sera appelée ci-après $F_1$. Ces erreurs permettent de définir une fonction d'erreur globale $F_{err}$.

Les procédés d'optimisation, selon l'art connu, reposent sur la recherche exhaustive de la meilleure combinaison possible. Cependant, ce procédé trouve très vite ses limites. En effet, pour un système à quatre éléments sources, comme celui décrit sur les figures 2 et 3, il existe trois degrés de liberté (une phase peut être fixée à zéro comme référence). Pour fixer les idées, si on considère un pas de 7,2°, il existe 125000 (50^3) évaluations de la fonction d'erreur. Ce procédé est possible pour quatre éléments sources, mais devient irréalisable pour des nombres d'éléments sources plus importants. Par exemple, pour seulement huit éléments sources, le nombre d'évaluations devient égal à environ $8 \cdot 10^{11}$.

L'invention propose un procédé d'optimisation permettant une convergence rapide.

Si l'on se reporte de nouveau au système de la figure 3, celui-ci est caractérisé par un atténuateur, $A_{t1}$ à $A_{t4}$, disposé en série avec un déphaseur, $\Phi_1$ à $\Phi_4$, sur chaque branche d'entrée de la matrice de Butler FCN. On considère, dans un premier temps, que le gain de chaque amplificateur, $Amp_1$ à $Amp_4$, est égal à 0 dB. On appelle $A_i$ et $\varphi_i$, les paramètres amplitudes et phases, associés respectivement aux atténuateurs, $A_{t1}$ à $A_{t4}$, et aux déphaseurs d'entrée, $\Phi_1$ à $\Phi_4$ (contrôlés par les signaux de commande $V_{i1}$ et $V_{i2}$). On appelle $\varphi'_i$ et $A'_i$, respectivement, les valeurs des phases et amplitudes des signaux en sortie de la matrice de Butler. On appelle $\varphi^t_i$ les valeurs de réglage de phase des déphaseurs de sortie, $\Phi'_1$ à $\Phi'_4$. On appelle enfin $\varphi^v_i$ et $A^v_i$ les valeurs d'amplitudes et de phases des signaux d'excitation cibles (c'est-à-dire les valeurs nécessaires pour obtenir la nouvelle configuration) au niveau des éléments sources, $S_1$ à $S_4$. Comme les sorties des déphaseurs, $\Phi_1$ à $\Phi_4$, n'ont pas d'influence sur les sorties de la matrice FCN, les seules valeurs à optimiser sont les amplitudes des signaux en sortie de matrice, $A'_i$. Le procédé d'optimisation consiste donc à trouver les amplitudes $A'_i$ des signaux d'entrée générant des amplitudes aussi proches que possible des valeurs $A^v_i$, cibles, en fonction des contraintes d'optimisation. Les valeurs des phases $\varphi^v_i$ des déphaseurs de sortie, $\Phi'_1$ à $\Phi'_4$, peuvent être calculée ultérieurement.

Ainsi, pour une matrice à $n$ entrées, il doit être considéré $2n$ variables d'entrée : phases et atténuations pour optimiser $n$ variables de sortie (amplitudes $A^v_i$). Une des phases d'entrée peut être prise comme phase de référence et rendue égale à 0°.

Idéalement, les facteurs d'atténuation devraient être tous égaux à 0 dB de façon à permettre à tous les amplificateurs d'opérer au même point de fonctionnement, et de ce fait de présenter la meilleure efficacité. Cependant, des essais menés par la Demanderesse ont montré que ces dispositions conduisaient à des erreurs importantes sur les amplitudes des signaux d'excitation et des pertes de directivité de l'antenne de l'ordre de 0.5 dB. Si on autorise de faibles variations en amplitude sur les entrées des amplificateurs, $Amp_1$ à Amp4, (de l'ordre de 15 à 20 % par exemple), on réduit les erreurs de sortie, au prix cependant d'un accroissement des pertes dans les amplificateurs. Ils ne fonctionnent plus alors à leur meilleure efficacité. La gamme de variations possibles des amplificateurs dépend naturellement des caractéristiques particulières de ceux-ci.

Le but de l'optimisation est donc finalement de trouver un compromis entre les pertes en directivité et les pertes en amplification, étant entendu qu'on doit fournir une couverture aussi proche que possible que celle désirée par l'utilisateur du système de transmission par satellite (valeurs cibles). Idéalement, les additions des deux types de pertes ne devraient pas être supérieures aux pertes dues à des signaux sur les entrées des amplificateurs d'amplitudes égales.

Avant de définir la fonction d'erreur globale $F_{err}$, il est nécessaire de rappeler brièvement quelques propriétés des matrices de Butler.

Un tel circuit est réalisé à partir de coupleurs en circuits hybrides. La figure 4a illustre schématiquement une matrice de Butler élémentaire M. Elle possède deux entrées et deux sorties. On réalise un croisement des entrées par rapport aux sorties. La fonction de transfert d'un tel circuit est la suivante :

$$T_1 = \frac{1}{\sqrt{2}}\begin{pmatrix} 1 & -j \\ -j & 1 \end{pmatrix}$$

Une matrice de Butler de dimensions 4x4 est illustrée par la figure 4b. elle comprend quatre entrées et quatre sorties. Elle est réalisée à partir de quatre matrices élémentaires, $M_{11}$ à $M_{22}$, en deux colonnes et deux rangées de matrices : $M_{11}$ et $M_{12}$ sur la première colonne et $M_{21}$ et $M_{22}$ sur la seconde colonne. Les sorties supérieure et inférieure des matrices $M_{11}$ et $M_{12}$ sont transmises directement aux entrées des matrices $M_{21}$ et $M_{22}$, alors que les sorties inférieure et supérieure de ces mêmes matrices sont croisées. On retrouve cet arrangement pour les sorties des matrices $M_{21}$ et $M_{22}$. Il existe donc un cheminement unique qui fait correspondre de façon biunivoque chaque paire d'entrée-sortie (bijection).

La fonction de transfert d'une matrice de Butler de dimensions 4x4 est la suivante :

$$T_2 = \frac{1}{2}\begin{pmatrix} T_1 & -jT_1 \\ -jT_1 & T_1 \end{pmatrix} = \frac{1}{2}\begin{pmatrix} 1 & -j & -j & -1 \\ -j & 1 & -1 & -j \\ -j & -1 & 1 & -j \\ -1 & -j & -j & 1 \end{pmatrix}$$

De proche en proche, on peut construire des matrices plus importantes. La figure 4c illustre une matrice de dimensions 8x8. Elle est constituée de trois colonnes de quatre rangées de matrices élémentaires : $M_{11}$ à $M_{34}$.

La fonction de transfert de cette matrice est la suivante :

$$T_3 = \frac{1}{\sqrt{8}}\begin{pmatrix} 1 & -j & -j & -1 & -j & -1 & -1 & 1 \\ -j & 1 & -1 & -j & -1 & -j & j & -1 \\ -j & -1 & 1 & -j & -1 & j & -j & -1 \\ -1 & -j & -j & 1 & j & -1 & -1 & -j \\ -j & -1 & -1 & j & 1 & -j & -j & -1 \\ -1 & -j & j & -1 & -j & 1 & -1 & -j \\ -1 & j & -j & -1 & -j & -1 & 1 & -j \\ j & -1 & -1 & -j & -1 & -j & -j & 1 \end{pmatrix}$$

On en déduit aisément que ces matrices peuvent être réduites à des matrices de phases avec les correspondances suivantes : $1 \rightarrow 0°$, $-j \rightarrow -90°$, $-1 \rightarrow -180°$ et $j \rightarrow -270°$.

Dans ces conditions la matrice 8x8 devient :

$$\underline{\underline{\theta}} = \begin{pmatrix} 0 & -90 & -90 & -180 & -90 & -180 & -180 & -270 \\ -90 & 0 & -180 & -90 & -180 & -90 & -270 & -180 \\ -180 & -90 & 0 & -90 & -180 & -270 & -90 & -180 \\ -180 & -90 & -90 & 0 & -270 & -180 & -180 & -90 \\ -90 & -180 & -180 & -270 & 0 & -90 & -90 & -180 \\ -180 & -90 & -270 & -180 & -90 & 0 & -180 & -90 \\ -180 & -270 & -90 & -180 & -90 & -180 & 0 & -90 \\ -270 & -180 & -180 & -90 & -180 & -90 & -90 & 0 \end{pmatrix}$$

Il est possible de diviser cette matrice $\underline{\underline{\theta}}$ en deux sous-matrices, $\underline{\underline{\theta}}_1$ et $\underline{\underline{\theta}}_2$. La division de puissance est représentée par le coefficient associé aux matrices de transfert $T_j$. Pour une matrice à $n$ entrées, ce coefficient est égale à $\sqrt{n}$

La formulation analytique du vecteur d'entrée est la suivante :

$$\underline{I} = \left[ A_1 e^{j\varphi_1}, A_2 e^{j\varphi_2}, \dots, A_n e^{j\varphi_n} \right]$$

La formulation analytique du vecteur de sortie est la suivante :

$$\underline{O} = \left[ A'_1 e^{j\varphi_1}, A'_2 e^{j\varphi_2}, \dots, A'_n e^{j\varphi_n} \right]$$

$$\underline{O} = \underline{\underline{T}} \cdot \underline{I}$$

$$O_i = \sum_{k=1}^{n} T_{ik} \cdot A_k \cdot e^{j\varphi_k} \quad \text{avec} \quad T_{ik} = \frac{e^{j\varphi_k}}{\sqrt{n}} ;$$

d'où

$$O_i = \frac{1}{\sqrt{n}} \sum_{k=1}^{n} e^{j\theta_{ik}} \cdot A_k \cdot e^{ji\varphi_k} ,$$

et

$$O_i = \frac{1}{\sqrt{n}} \left[ \sum_{k=1}^{n} A_k \cdot \cos(\theta_{ik} + \varphi_k) + j \sum_{k=1}^{n} A_k \cdot \sin(\theta_{ik} + \varphi_k) \right]$$

Seules les amplitudes $A'_i$ doivent être optimisées, d'où :

$$A'_i = |O_i| = \frac{1}{\sqrt{n}} \sqrt{\left( \sum_{k=1}^{n} A_k \cdot \cos(\theta_{ik} + \varphi_k) \right)^2 + \left( \sum_{k=1}^{n} A_k \cdot \sin(\theta_{ik} + \varphi_k) \right)^2}$$

$$\tan(\varphi'_i) = \frac{\sum_{k=1}^{n} A_k \cdot \sin(\theta_{ik} + \varphi_k)}{\sum_{k=1}^{n} A_k \cdot \cos(\theta_{ik} + \varphi_k)}$$

Les facteurs phase $\varphi'_i$ sont utilisés pour calculer les phases de des déphaseurs de sortie, $\Phi'_1$ à $\Phi'_4$.

La fonction d'erreur globale $F_{err}$ peut être définie comme suit :

$$F_{err} = F_1 * F_2$$

La formulation analytique de $F_1$ est la suivante :

$$F_1 = \sum_{i=1}^{n} \left| A_i^y - A'_i \right|,$$

d'où

$$F_1 = \sum_{i=1}^{n} \left| A_i^y - \frac{1}{\sqrt{n}} \sqrt{\left( \sum_{k=1}^{n} A_k \cdot \cos(\theta_{ik} + \varphi_k) \right)^2 + \left( \sum_{k=1}^{n} A_k \cdot \sin(\theta_{ik} + \varphi_k) \right)^2} \right|$$

En déterminant $F_2$, on essaie de conserver les facteurs d'atténuation $A_i$ à l'intérieur d'une gamme prédéterminée, telle que la relation suivante soit satisfaite :

$$F_2 = \prod_{i=1}^{n} \left[ 1 + \left| \frac{A_i - 1}{a} \right|^b \right]$$

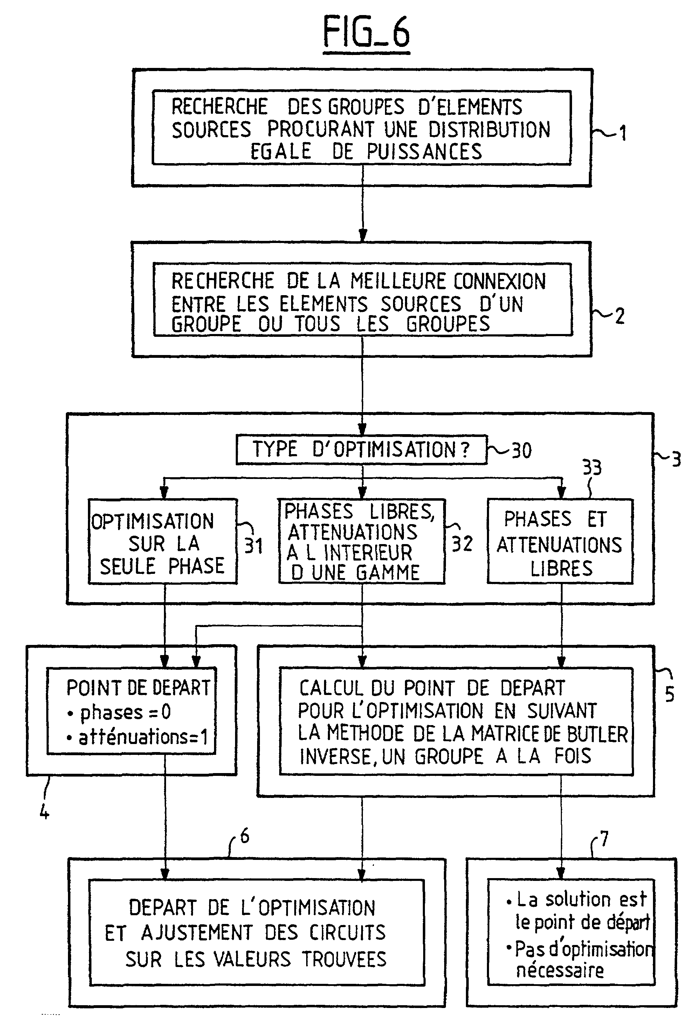

La courbe de la figure 5 illustre la fonction $f = (X/a)b$.

Les coefficients $a$ et $b$ doivent être déterminés de manière à satisfaire les exigences de l'optimisation désirée. On suppose que la fonction $f$ est égale à $Y_0$ lorsque $X = X_0$ et que $f$ égal à $Y_0/d$ pour $cx_0$, $c$ et $d$ étant des coefficients prédéterminés. Les relations suivantes sont alors satisfaites.

$$\left( \frac{X_0}{a} \right)^i = Y_0 \qquad\qquad b = -\frac{\log(d)}{\log(c)}$$

$$\left. \begin{array}{c} \\ \\ \end{array} \right\} \Rightarrow$$

$$\left( \frac{cX_0}{a} \right)^b = \frac{Y_0}{d} \qquad\qquad a = \frac{X_0}{\sqrt[b]{Y_0}}$$

Avec ces coefficients $a$ et $b$, les valeurs de $f$ seront plus faibles que $Y_0/d$ si $X$ est inférieur à $cX_0$. Au delà de la valeur $cX_0$, la pente de $f$ devient très forte et tend vers l'infini.

Pour fixer les idées, on considère les valeurs prédéfinies suivantes :

$Y_0 = 9$, $X_0 = 0,2$, $c = 0,8$ et $d = 9$, dans ce cas, $a = 0,16$ et $b = 9,81$.

Si on considère à présent l'expression suivante

$$F_{2i} = 1 + \left|\frac{A_i - 1}{a}\right|^2,$$

qui est l'une des composantes de $F_2$, on constate qu'une variation de $A_i$ de l'ordre de 16% autour de l'unité conduit à une erreur $F_{2i}$ égale à 2. Cependant si la variation atteint une amplitude de 20%, l'erreur sur $F_{2i}$ est égale à 10.

On en déduit que lorsque les facteurs d'atténuation Ai restent à l'intérieur de la gamme définie par $a$ et $b$, la contribution de $F_2$ à la fonction d'erreur reste également faible.

On peut maintenant écrire la fonction d'erreur globale comme suit :

$$F_{err} = \sum_{i=1}^{n} \left| A_i^v - \frac{1}{\sqrt{n}} \sqrt{\left(\sum_{k=1}^{n} A_k \cdot \cos(\theta_{ik} + \varphi_k)\right)^2 + \left(\sum_{k=1}^{n} A_k \cdot \sin(\theta_{ik} + \varphi_k)\right)^2} \right| * \prod_{i=1}^{n} \left[1 + \left|\frac{A_i - 1}{a}\right|^b\right]$$

Cette première étape étant réalisée, on va maintenant appliquer un algorithme de recherche du type gradient. Ce type d'algorithme est utilisé pour trouver les valeurs extrêmes d'une fonction. Dans le cas présent, il s'agit de trouver le minimum de la fonction d'erreur.

L'algorithme est basé sur le principe connu suivant :

Un vecteur initial, le gradient maximum, est calculé. Ce vecteur indique la direction de la pente maximale. On suit ensuite cette pente avec un pas donné jusqu'à ce que le point le plus bas soit atteint (à précision donnée). A ce point, une seconde évaluation du gradient est effectuée et le pas est divisé par deux. Une recherche est effectuée le long de la nouvelle ligne jusqu'à ce qu'un minimum soit trouvé, et ainsi de suite. Les itérations sont arrêtées lorsque la pente est égale à zéro ou lorsqu'elle est suffisamment proche de cette valeur.

Le problème du minima local peut être résolu en utilisant différents points de départ. S'ils donnent tous le même résultat, le minimum trouvé constitue certainement un minimum absolu.

Une manière d'accélérer la convergence, et d'éviter le minimum local, est de trouver une solution analytique proche de l'optimum. Ceci peut être réalisé, selon le procédé de l'invention en considérant le circuit de la figure 5.

Sur cette figure, on a fait précéder le conformateur de faisceaux de la figure 3, par un conformateur de faisceaux de substitution constitué d'atténuateurs, A'$_t$, de déphaseurs, $\Phi'_i$, et d'une matrice de Butler FCN' en cascade. Cette dernière a pour caractéristique d'être constituée par une matrice de Butler inverse ou miroir de la matrice de Butler FCN "normale" de la figure 3. Cela signifie que le produit des deux matrices de transfert est égal à l'unité. De façon pratique, une matrice de Butler inverse peut être obtenue en utilisant les entrées à la place des sorties et inversement. Les atténuateurs A'$_t$, et les déphaseurs, $\Phi'_i$, sont identiques aux éléments correspondants du système conformateur de la figure 3, A$_t$ et $\Phi'_i$, respectivement.

On suppose, dans un premier temps, que les facteurs d'atténuation $A_i$ sont égaux à l'unité et que les phases $\varphi_i$ sont égales à zéro. On reproduit les valeurs cibles $A_i^v$ et $\varphi_i^t$, en amplitude et en phase, aux entrées de la matrice de Butler inverse FCN'. On obtient sur ses sorties une série de valeurs de phases et d'amplitudes, $A_p$ et $\varphi_p$, respectivement. Cette série est utilisée comme entrées pour la matrice de Butler "normale" FCN. Par nouvelle inversion, celle-ci redonne les excitations, $A_i^v$ et $\varphi_i^t$, désirées sur ses sorties.

Cette solution n'est pas entièrement satisfaisante, car les amplitudes des signaux aux entrées des amplificateurs ne sont plus identiques. Ces amplitudes dépendent de la façon dont les éléments sources sont connectés à la matrice de Butler. De ce fait, ces connexions apparaissent très critiques. Pour un système à quatre éléments sources, il existe 4! Connexions possibles, soit 24 possibilités différentes. Ce nombre augmente très vite : pour 8 éléments sources, le nombre de combinaisons est 8! = 40320.

En testant toutes les combinaisons possibles, on peut trouver celle qui procure les différences en amplitudes d'entrée les plus faibles. Ceci constitue le point de départ de l'optimisation : valeurs présentes en sorties de la matrice de Butler inverse, ou encore en entrée des atténuateurs du système de la figure 3.

Les conditions de départ sont alors les suivantes : $F_1 = 0$ et $F_2$ est, comme indiqué ci-dessus, aussi faible que possible. Comme la fonction erreur globale $F_{err}$ est définie comme étant égale à : $F_1 * F_2$, celle-ci est aussi égale à zéro et le processus d'optimisation ne peut démarrer.

La solution consiste à introduire une faible perturbation aléatoire, $\Delta\varphi_i$, sur les phases d'entrée $\varphi_i$. De ce fait, le vecteur d'entrée n'est plus optimal (car $F_1 \neq 0$), mais reste cependant très proche des conditions initiales (point de départ). Ceci est suffisant pour démarrer le processus d'optimisation (à l'aide de l'algorithme de gradient) et trouver la fonction d'erreur optimale (qui prend en compte les facteurs d'atténuation). Le procédé de l'invention fonctionne aussi bien pour une optimisation complète que pour une optimisation limitée à la phase.

Avec une matrice de Butler à $n$ entrées, il est possible d'obtenir $n$ configurations différentes de la couverture d'antenne, en d'autres termes $n$ reconfigurations, on dispose, pour chacun de ces éléments, de $n$ coefficients d'excitation. Comme les éléments sources sont connectés une fois pour toutes à la matrice de Butler, il est nécessaire de déterminer les connexions créant une erreur minimale pour toutes les couvertures possibles, cette erreur étant la somme des $n$ erreurs correspondant aux $n$ couvertures.

Si les variations entre les amplitudes d'entrées sont suffisamment faibles et sont comprises à l'intérieure d'une gamme permise, il est alors inutile de procéder à une optimisation. Dans le cas contraire, il est nécessaire de procéder à cette optimisation, selon le processus qui vient d'être décrit, jusqu'à ce que les facteurs d'atténuations soient compris dans la gamme permise. L'optimisation dégrade quelque peu les signaux de sortie de la matrice "normale" mais les pertes dans les amplificateurs, dues à des déséquilibres en amplitude des signaux d'entrée sont très fortement réduites.

Dans certaines variantes de réalisation d'antenne, les éléments sources peuvent être arrangés par groupes. Dans ce cas, une étape préliminaire peut consister à trouver quels groupes sont à connecter à la matrice de Butler. Ces groupes doivent émettre la même puissance moyenne. Cette condition réduit fortement le nombre de groupes possible. Le seul problème est qu'il est nécessaire de procéder à une recherche exhaustive de tous les groupes possibles pour trouver les meilleurs.

Avec 16 éléments sources et 4 groupes de 4 éléments sources, il existe un grand nombre de groupes procurant une distribution de puissances acceptable et, idéalement, le processus doit être appliqué à tous les groupes.

Le diagramme de la figure 6 illustre schématiquement les phases possibles d'un procédé complet d'optimisation et ses alternatives.

- La phase 1 consiste en la recherche des groupes d'éléments de sources procurant une distribution égale de puissances ;
- La phase 2 consiste en la recherche de la meilleure connexion entre les éléments sources d'un groupe ou de tous les groupes ;
- La phase 3 comprend plusieurs étapes et alternatives. La première étape, 30, consiste à déterminer le type d'optimisation mettre en oeuvre :

    a/ en 31, une optimisation basée sur la phase ;
    b/ en 32, des phases libres et des atténuations à l'intérieur d'une gamme prédéterminée ;
    c/ ou, en 33, des phases et atténuations libres.
    Le choix 31 conduit à la phase 4. Le choix 32 peut conduire soit à la phase 4, soit à la phase 5. Le choix 33 conduit à la phase 5.

- La phase 4 constitue le point de départ de l'optimisation avec comme paramètres :

    a/phases = 0 ;
    b/ atténuations = 1.

- La phase 5 concerne le calcul du point de départ, en mettant en oeuvre la méthode de la matrice de Butler inverse (voir figure 5), un groupe de sources à la fois.
    La phase 4 conduit à la phase 6. La phase 5 conduit soit à la phase 6, soit à la phase 7.
- La phase 6 concerne le procédé d'optimisation proprement dit mettant en oeuvre l'algorithme du gradient. A la fin de cette phase, les atténuateurs et les déphaseurs sont ajustés en utilisant les paramètres d'optimisation, $A_i$ et $\varphi_i$ résultant de l'optimisation.
- La phase 7 concerne le cas où la solution à appliquer est celles utilisant les valeurs du point de départ. Il est alors inutile de lancer le processus d'optimisation.

Si le processus d'optimisation est effectivement lancé, en fin de celui-ci, les circuits de l'étage de substitution sont retirés et les valeurs trouvées servent à ajuster les étages d'entrée (phase 6 ci-dessus), de manière à obtenir en sortie les paramètres cibles, $\varphi_i^v$ et $A_i^v$, nécessaires à la reconfiguration souhaitée. Pour ce faire, on utilise le circuit de commande P (figures 2 et 3).

En résumé, le procédé d'optimisation proprement dit comprend les étapes principales suivantes:

- Définition d'une fonction d'erreur globale $F_{err} = F_1 * F_2$, avec $F_1$ étant la somme des différences entre les amplitudes des signaux cibles et les amplitudes des signaux réellement obtenus, et $F_2$ étant représentatif de la variation autour de 0 dB.
- Remplacement du diviseur d'entrée en signaux de puissances égales, par des circuits de substitution comprenant, en cascade, des atténuateurs, des déphaseurs d'entrées et une matrice de Butler ; les atténuateurs et les déphaseurs étant identiques aux atténuateurs du système selon la figure 3 et la matrice de Butler étant la matrice inverse de ce système.

- Application aux entrées du circuit de substitution des paramètres cibles de phase et d'amplitude, et acquisition des phases et amplitudes des signaux en sorties des circuits de substitution comme paramètres formant point de départ.

- Lancement d'un algorithme de recherche de valeurs minima du type gradient à partir de ce point de départ et acquisition de ces minima en sorties du circuit de substitution.

- Retrait du circuit de substitution et ajustement des circuits atténuateurs et déphaseurs du système selon la figure 3 par les paramètres nouvellement acquis correspondant aux minima précités.

A la lecture de ce qui précède, on constate aisément que l'invention atteint bien les buts qu'elle s'est fixés.

Elle permet une reconfiguration optimisée de la couverture d'une antenne de satellite.

Il doit cependant être clair que les données numériques (nombre d'éléments sources, etc.) n'ont été précisées que pour mieux fixer les idées.

De même, le type des éléments sources ou de l'antenne n'est pas critique. Cette dernière peur être notamment du type "offset", comme décrit dans l'article de Howard H. S. LUH précité.

De façon générale, les circuits et organes constitutifs (atténuateurs, déphaseurs, matrices de Butler, etc.) peuvent être choisis parmi ceux utilisés couramment dans l'art connu, seule l'architecture du système conformateur de faisceaux étant spécifique à l'invention. Il en est de même des bandes de fréquences utilisées.

## Revendications

1. Système de conformation de faisceau zonal reconfigurable pour une antenne embarquée sur un satellite en orbite, présentant un nombre $N$ déterminé de voies, comprenant au moins un répartiteur d'entrée (SP) divisant un signal d'entrée en $N$ signaux d'amplitudes égales appliqués aux $N$ voies, un premier ensemble de déphaseurs variables ($\Phi_1$-$\Phi_4$), dits d'entrée, et un ensemble d'amplificateurs de signaux (Amp$_1$-Amp$_4$), chaque voie comprenant un déphaseur et un amplificateur disposés en cascade, une première matrice de Butler (FCN) à $N$ entrées et $N$ sorties, et $N$ éléments sources de rayonnement (S$_1$-S$_4$), l'ajustement des phases des $N$ déphaseurs dits d'entrée ($\Phi_1$-$\Phi_4$) à une valeur de phase déterminée ($\varphi_i$) permettant d'obtenir ladite reconfiguration du diagramme de rayonnement de l'antenne, **caractérisé en ce qu'**il comprend, en outre, un second ensemble de $N$ déphaseurs variables ($\Phi'_1$-$\Phi'_4$), dits de sortie, un de ces déphaseurs variables étant disposé entre chacune desdites sorties de la matrice de Butler (FCN) et chacun desdits éléments sources de l'antenne (S$_1$-S$_4$), l'ajustement relatif des déphasages introduits par lesdits déphaseurs d'entrée ($\Phi_1$-$\Phi_4$) et des déphaseurs de sortie ($\Phi'_1$-$\Phi'_4$) permettant d'obtenir une distribution équilibrée en amplitude des signaux d'excitation desdits éléments sources de rayonnement, nécessaire à ladite reconfiguration.

2. Système selon la revendication 1, **caractérisé en ce que** l'on dispose, sur chaque voie d'entrée, un atténuateur de signaux variable (At$_1$-At$_4$) disposé en cascade avec lesdits déphaseurs d'entrée ($\Phi_1$-$\Phi_4$).

3. Système selon la revendication 1, **caractérisé en ce qu'**il comprend en outre des moyens de calcul de paramètres d'optimisation et de commande (P) appliquant auxdits déphaseurs d'entrée ($\Phi_1$-$\Phi_4$) et de sortie ($\Phi'_1$-$\Phi'_4$) des signaux de commande (V$_i$, V$_s$) ajustant leurs déphasages relatifs, de manière à obtenir une répartition optimisée des signaux d'excitation desdits éléments sources de rayonnement.

4. Système selon l'une des revendications 1 ou 2, **caractérisé en ce qu'**il comprend en outre des moyens de calcul de paramètres d'optimisation et de commande (P) appliquant auxdits déphaseurs d'entrée ($\Phi_1$-$\Phi_4$) et de sortie ($\Phi'_1$-$\Phi'_4$), ainsi qu'auxdits atténuateurs variables (At$_1$-At$_4$), des signaux de commande (V$_{i1}$, V$_{i2}$, V$_s$) ajustant leurs déphasages relatifs et leur coefficient d'atténuation, de manière à obtenir une répartition optimisée des signaux d'excitation desdits éléments sources de rayonnement.

5. Procédé d'optimisation de la reconfiguration obtenue par le système selon l'une quelconque des revendications 1 à 4, **caractérisé en ce qu'**il comprend au moins les phases suivantes :

   a/ définition d'une fonction d'erreur globale $F_{err} = F_1{}^*F_2$, avec $F_1$ étant la somme des différences entre les amplitudes ($A_i^v$) à obtenir des signaux d'excitation desdits éléments sources de rayonnement (S$_1$-S$_4$), dits signaux cibles, et les amplitudes des signaux réellement obtenus ($A'_i$), et $F_2$ représentant la variation de l'atténuation des signaux autour de la valeur 0 dB ;

   b/ remplacement dudit répartiteur d'entrée (SP) divisant le signal d'entrée en $N$ signaux d'amplitudes égales appliqués auxdites *N* voies, par des circuits de substitution comprenant, en cascade sur chacune des *N* voies, un atténuateur (At') et un déphaseur d'entrée ($\Phi'_i$), et une seconde matrice de Butler (FCN') ; les atténuateurs (At') et les déphaseurs ($\Phi'_i$) étant identiques aux atténuateurs (At) et déphaseurs ($\Phi_i$) dudit système conformateur de faisceau et la seconde matrice de Butler (FCN') étant la matrice inverse de ladite première matrice de Butler (FCN) ;

c/ application aux entrées du circuit de substitution des phases ($\varphi_i^v$) et amplitudes ($A_i^v$) desdits signaux cibles, et acquisition des phases ($\varphi_p$) et amplitudes ($A_p$) des signaux en sorties des circuits de substitution comme paramètres formant un point de départ ;

d/ lancement d'un algorithme de recherche de valeurs minima du type gradient à partir des valeurs ($\varphi_p$, $Ap$) de ce point de départ et acquisition de ces minima en sorties des circuits de substitution, et ;

e/ retrait du circuit de substitution (A'$_t$, $\Phi'_i$, FCN') et ajustement des circuits atténuateurs (At) et déphaseurs ($\Phi_i$) du système conformateur de faisceau par des paramètres déterminés lors de la phase précédente, correspondant auxdits minima ;

de manière à obtenir une erreur globale minimale pour ladite reconfiguration.

6. Procédé selon la revendication 5, **caractérisé en ce qu'**il comprend une étape préalable à ladite phase d/ consistant en l'introduction aléatoire d'une faible perturbation, d'amplitude maximale déterminée, des signaux d'entrée de ladite première matrice de Butler (FCN) autour de la valeur 0 dB.

7. Procédé selon la revendication 5, **caractérisé en ce qu'**à la suite de ladite phase c/, les valeurs de point de départ ($\varphi_p$, $A_p$) sont comparées à une gamme déterminée de valeurs de référence et **en ce que**, si les valeurs de point de départ sont à l'intérieur d'une gamme déterminée, lesdites étapes d/ et e/ ne sont pas effectuées et les circuits atténuateurs (At) et déphaseurs d'entrée ($\Phi_i$) du système conformateur de faisceau sont directement ajustés aux valeurs du point de départ.

8. Procédé selon l'une quelconque des revendications 5 à 7, **caractérisé en ce qu'**il comprend une phase préliminaire consistant en la recherche de la combinaison de connexions entre les éléments sources de rayonnement ($S_1$-$S_4$) et ladite première matrice de Butler (FCN) procurant une différence entre amplitudes des signaux d'entrée la plus faible.

9. Procédé selon l'une quelconque des revendications 5 à 7, **caractérisé en ce que**, les éléments sources de rayonnements étant organisés en groupe, il comprend une phase préliminaire supplémentaire consistant en la recherche du groupe éléments sources de rayonnements à connecter à ladite première matrice de Butler (FCN) procurant la meilleure distribution en puissance rayonnée.

**Patentansprüche**

1. System zur Konfiguration eines rekonfigurierbaren zonalen Bündels einer Antenne auf einem Satellit in der Umlaufbahn, welches eine bestimmte Anzahl *N* von Kanälen aufweist, mit wenigstens einem Eingangsverteiler (SP), der ein Eingangssignal in *N* Signale mit gleichen Amplituden unterteilt, welche in die *N* Kanäle geleitet werden, einem ersten Satz variabler, sogenannter Eingangs-Phasenschieber ($\Phi_1$-$\Phi_4$) und einem Satz Signalverstärker (Amp$_1$-Amp$_4$), wobei jeder Kanal einen Phasenschieber und einen Verstärker aufweist, die kaskadenartig angeordnet sind, einer ersten Butler-Matrix (FCN) mit *N* Eingängen und *N* Ausgängen, und *N* Strahlungsquellenelementen ($S_1$-$S_4$), wobei die Einstellung der Phasen der *N* sogenannten Eingangs-Phasenschieber ($\Phi_1$-$\Phi_4$) auf einen bestimmten Phasenwert ($\ddot{o}_i$) ermöglicht, die Rekonfiguration des Strahlungsdiagramms der Antenne zu erreichen, **dadurch gekennzeichnet, dass** das System außerdem einen zweiten Satz von *N* variablen, sogenannten Ausgangs-Phasenschiebem ($\Phi'_1$-$\Phi'_4$) umfasst, wobei einer dieser variablen Phasenschieber zwischen jedem der Ausgänge der Butler-Matrix (FCN) und jedem der Quellenelemente der Antenne ($S_1$-$S_4$) angeordnet ist, wobei die relative Einstellung der von den Eingangs-Phasenschiebem ($\Phi_1$-$\Phi_4$) und den Ausgangs-Phasenschiebern ($\Phi'_1$-$\Phi'_4$) eingeführten Phasenverschiebungen ermöglicht, eine ausgeglichene Amplitudenverteilung der Erregungssignale für die Strahlungsquellenelemente zu erhalten, die für die Rekonfiguration erforderlich ist.

2. System gemäß Anspruch 1, **dadurch gekennzeichnet, dass** auf jedem Eingangskanal ein variables Signalabschwächungsglied (At$_1$-At$_4$) angeordnet wird, das bezüglich der Eingangs-Phasenschieber ($\Phi_1$-$\Phi_4$) kaskadenartig angeordnet ist.

3. System gemäß Anspruch 1, **dadurch gekennzeichnet, dass** es außerdem Vorrichtungen zur Berechnung von Optimierungs- und Steuerparametern (P) aufweist, welche den Eingangs-Phasenschiebern ($\Phi_1$-$\Phi_4$) und den Ausgangs-Phasenschiebern ($\Phi'_1$-$\Phi'_4$) Steuersignale ($V_i$, $V_s$) übermitteln, welche ihre relativen Phasenverschiebungen derart einstellen, dass eine optimierte Verteilung der Erregungssignale für die Strahlungsquellenelemente erreicht wird.

4. System gemäß einem der Ansprüche 1 oder 2, **dadurch gekennzeichnet, dass** es außerdem Vorrichtungen zur Berechnung von Optimierungs- und Steuerparametern (P) aufweist, welche den Eingangs-Phasenschiebern ($\Phi_1$-$\Phi_4$) und den Ausgangs-Phasenschiebern ($\Phi'_1$-$\Phi'_4$) sowie den variablen Abschwächungsgliedern ($At_1$-$At_4$) Steuersignale ($V_{i1}$, $V_{i2}$, $V_s$) übermitteln, welche ihre relativen Phasenverschiebungen und ihren Abschwächungskoeffizienten derart einstellen, dass eine optimierte Verteilung der Erregungssignale für die Strahlungsquellenelemente erreicht wird.

5. Verfahren zur Optimierung der durch das System gemäß irgendeinem der Ansprüche 1 bis 4 erreichten Rekonfiguration, **dadurch gekennzeichnet, dass** es wenigstens die folgenden Phasen aufweist:

   a/ Definierung einer globalen Fehlerfunktion $F_{err} = F_1 * F_2$, wobei $F_1$ die Summe der Differenzen zwischen den zu erreichenden Amplituden ($A_i^v$) der Erregungssignale für die Strahlungsquellenelemente ($S_1$-$S_4$), der sogenannten Zielsignale, und den tatsächlich erreichten Amplituden der Signale ($A'_i$) darstellt, und wobei $F_2$ die Schwankung der Abschwächung der Signale um den Wert von 0 dB herum darstellt;
   b/ Ersetzen des Eingangsverteilers (SP), der das Eingangssignal in $N$ Signale mit gleichen Amplituden unterteilt, welche in die $N$ Kanäle geleitet werden, durch Ersatzschaltungen, welche in einer Kaskade auf jedem der $N$ Kanäle ein Abschwächungsglied (At') und einen Eingangs-Phasenschieber ($\Phi'_i$) und eine zweite Butler-Matrix (FCN') aufweisen; wobei die Abschwächungsglieder (At') und die Phasenschieber ($\Phi'_i$) identisch mit den Abschwächungsgliedern (At) und den Phasenschiebern ($\Phi_i$) des Konfigurationssystems für das Strahlenbündel sind, und wobei die zweite Butler-Matrix (FCN') die umgekehrte Matrix der ersten Butler-Matrix (FCN) ist;
   c/ Übermittlung der Phasen ($\varphi^v_i$) und der Amplituden ($A_i^v$) der Zielsignale an die Eingänge der Ersatzschaltung und Erfassung der Phasen ($\varphi_p$) und der Amplituden ($A_p^j$) der Signale an den Ausgängen der Schaltungen als Parameter, die einen Ausgangspunkt bilden;
   d/ Erstellung eines Suchalgorithmus für Minimalwerte der Gradientenart ausgehend von den Werten ($\varphi_p$, $A_p$) dieses Ausgangspunktes und Erfassung dieser Minimalwerte an den Ausgängen der Ersatzschaltungen, und
   e/ Rücknahme der Ersatzschaltung ($A'_t$, $\Phi'_i$, FCN') und Einstellung der Abschwächungsschaltungen (At) und Phasenschieber ($\Phi_i$) des Konfigurationssystems für das Strahlenbündel mittels der während der vorherigen Phase bestimmten Parameter, welche den Minimalwerten entsprechen, derart,

   dass ein minimaler globaler Fehler für die Rekonfiguration erhalten wird.

6. Verfahren gemäß Anspruch 5, **dadurch gekennzeichnet, dass** es einen Schritt vor der Phase d/ aufweist, welcher in der zufälligen Einstreuung einer leichten Störung mit bestimmter maximaler Amplitude der Eingangssignale der ersten Butler-Matrix (FCN) um den Wert von 0 dB herum besteht.

7. Verfahren gemäß Anspruch 5, **dadurch gekennzeichnet, dass** nach der Phase c/ die Ausgangspunktwerte ($\varphi_p$, $A_p$) mit einem bestimmten Bereich von Referenzwerten verglichen werden, und dass, wenn sich die Ausgangspunktwerte innerhalb eines bestimmten Bereiches befinden, die Schritte d/ und e/ nicht durchgeführt werden und die Abschwächungsschaltungen (At) und Eingangs-Phasenschieber ($\Phi_i$) des Konfigurationssystems für das Strahlenbündel direkt auf die Ausgangspunktwerte eingestellt werden.

8. Verfahren gemäß irgendeinem der Ansprüche 5 bis 7, **dadurch gekennzeichnet, dass** es eine Vor-Phase umfasst, welche in der Suche nach der Kombination von Verbindungen zwischen den Strahlungsquellenelementen ($S_1$-$S_4$) und der ersten Butler-Matrix (FCN) besteht, welche die geringste Differenz zwischen den Amplituden der Eingangssignale schafft.

9. Verfahren gemäß irgendeinem der Ansprüche 5 bis 7, **dadurch gekennzeichnet, dass** es, wenn die Strahlungsquellenelemente in Gruppen organisiert sind, eine zusätzliche Vor-Phase umfasst, welche in der Suche nach der Gruppe von Strahlungsquellenelementen besteht, welche bei ihrer Verbindung mit der ersten Butler-Matrix (FCN) die beste Verteilung der Strahlungsleistung schafft.

**Claims**

1. Reconfigurable zonal beam-forming system for an antenna on board an orbiting satellite, having a predetermined number $N$ of channels, comprising at least one input divider (SP) dividing an input signal into $N$ signals of equal amplitudes applied to the $N$ channels, a first set of variable phase shifters ($\Phi_1$-$\Phi_4$), called input phase shifters, and a set of signal amplifiers (Amp$_1$-Amp$_4$), each channel comprising one phase shifter and one amplifier which are arranged in cascade, a first Butler matrix (FCN) having $N$ inputs and $N$ outputs, and $N$ radiation source elements (S$_1$-S$_4$), the adjustment of the phases of the $N$ input phase shifters ($\Phi_1$-$\Phi_4$) to a predetermined phase value ($\varphi_i$) making it possible to obtain the said reconfiguration of the radiation pattern of the antenna, **characterized in that** it furthermore comprises a second set of $N$ variable phase shifters ($\Phi'_1$-$\Phi'_4$), called output phase shifters, one of these variable phase shifters being placed between each of the said outputs of the Butler matrix (FCN) and each of the said source elements (S$_1$-S$_4$) of the antenna, the relative adjustment of the phase shifts introduced by the said input phase shifters ($\Phi_1$-$\Phi_4$) and output phase shifters ($\Phi'_1$-$\Phi'_4$) making it possible to obtain a balanced distribution in terms of amplitude of the excitation signals for the said radiation source elements, this being needed for the said reconfiguration.

2. System according to Claim 1, **characterized in that** a variable signal attenuator (At$_1$-At$_4$) is placed in each input channel, the attenuator being arranged in cascade with the said input phase shifters ($\Phi_1$-$\Phi_4$).

3. System according to Claim 1, **characterized in that** it furthermore includes optimization-parameter-calculating and control means (P) applying to the said input ($\Phi_1$-$\Phi_4$) and output ($\Phi'_1$-$\Phi'_4$) phase shifters, control signals ($V_i$, $V_s$) which adjust their relative phase shifts, so as to obtain an optimized distribution of the excitation signals for the said radiation source elements.

4. System according to either of Claims 1 and 2, **characterized in that** it furthermore includes optimization-parameter-calculating and control means (P) applying to the said input ($\Phi_1$-$\Phi_4$) and output ($\Phi'_1$-$\Phi'_4$) phase shifters, and to the said variable attenuators (At$_1$-At$_4$), control signals ($V_{i1}$, $V_{i2}$, $V_s$) which adjust their relative phase shifts and their attenuation coefficient, so as to obtain an optimized distribution of the excitation signals for the .said radiation source elements.

5. Optimization procedure for the reconfiguration obtained by the system according to any one of Claims 1 to 4, **characterized in that** it comprises at least the following phases:

   a) definition of an overall error function $F_{err} = F_1{}^*F_2$, where $F_1$ is the sum of the differences between the amplitudes ($A_i^v$) to be obtained from the excitation signals for the said radiation source elements (S$_1$-S$_4$), called target signals, and the amplitudes $(A'_i)$ of the signals actually obtained, and $F_2$ is the variation in the attenuation of the signals about the 0 dB value;
   b) replacement of the said input divider (SP), which divides the input signal into $N$ signals of equal amplitudes applied to the said $N$ channels, with substitution circuits comprising, in cascade in each of the $N$ channels, an attenuator (At') and an input phase shifter ($\Phi'_i$), and a second Butler matrix (FCN'), the attenuators (At') and the phase shifters ($\Phi'_i$) being identical to the attenuators (At) and phase shifters ($\Phi_i$) of the said beam-forming system and the second Butler matrix (FCN') being the inverse matrix of the said first Butler matrix (FCN);
   c) application of the phases ($\varphi_i^v$) and amplitudes ($A_i^v$) of the said target signals to the inputs of the substitution circuit and acquisition of the phases $(\varphi_p)$ and amplitudes $(A_p)$ of the signals at the outputs of the substitution circuits as parameters forming a starting point;
   d) running of an algorithm which seeks minimum values of the gradient type from the values $(\varphi_p, A_p)$ of this starting point and acquisition of these minima at the outputs of the substitution circuits; and
   e) removal of the substitution circuit (A'$_t$, $\Phi'_i$, FCN') and adjustment of the attenuator (At) and phase-shifter ($\Phi_i$) circuits of the beam-forming system by parameters determined in the previous phase, corresponding to the said minima;

   so as to obtain a minimum overall error for the said reconfiguration.

6. Procedure according to Claim 5, **characterized in that** it comprises a step prior to the said phase d) consisting of the random introduction of a small perturbation, of defined maximum amplitude, of the input signals for the said first Butler matrix (FCN) about the 0 dB value.

7. Procedure according to Claim 5, **characterized in that** after the said phase c), the starting point values $(\varphi_p, A_p)$

are compared with a defined range of reference values and **in that** if the starting point values lie within a defined range the said steps d) and e) are not carried out and the attenuator (At) and input phase-shifter ($\Phi_i$) circuits of the beam-forming circuit are directly adjusted to the starting point values.

8.  Procedure according to any one of Claims 5 to 7, **characterized in that** it comprises a preliminary phase consisting in searching for the combination of connections between the radiation source elements ($S_1$-$S_4$) and the said first Butler matrix (FCN) providing the lowest difference between amplitudes of the input signals.

9.  Procedure according to any one of Claims 5 to 7, **characterized in that**, with the radiation source elements being organized in a group, it comprises an additional preliminary phase consisting in searching for the group of radiation source elements to be connected to the said first Butler matrix (FCN) providing the best radiated power distribution.

## FIG_1

## FIG_2

FIG_3

FIG_5

Valeurs cibles

Point de départ (Ap, φp)

Paramètres d'optimisation

Ajustage de phase

Valeurs cibles

FIG_4a

FIG_4c

FIG_4b

# FIG_6

```
┌──────────────────────────────────────────────┐
│  RECHERCHE  DES GROUPES  D'ELEMENTS           │
│  SOURCES  PROCURANT UNE DISTRIBUTION          │ ～1
│  EGALE  DE  PUISSANCES                        │
└──────────────────────────────────────────────┘
                      │
                      ▼
┌──────────────────────────────────────────────┐
│  RECHERCHE DE LA MEILLEURE CONNEXION          │
│  ENTRE LES ELEMENTS SOURCES  D'UN             │ ～2
│  GROUPE  OU TOUS  LES  GROUPES                │
└──────────────────────────────────────────────┘
                      │
                      ▼
┌─────────────────────────────────────────────────────────┐
│         ┌─────────────────────────┐                      │ ～3
│         │  TYPE  D'OPTIMISATION ?  │ ～30                 │
│         └─────────────────────────┘                      │
│                                                    33     │
│  ┌──────────────┐  ┌──────────────────┐  ┌──────────────┐│
│  │ OPTIMISATION │  │ PHASES  LIBRES,  │  │  PHASES  ET  ││
│  │   SUR LA     │  │ ATTENUATIONS     │  │ ATTENUATIONS ││
│  │ SEULE PHASE  │31│ A L INTERIEUR  │32│    LIBRES    ││
│  │              │  │ D UNE GAMME      │  │              ││
│  └──────────────┘  └──────────────────┘  └──────────────┘│
└─────────────────────────────────────────────────────────┘
```

```
┌─────────────────────┐   ┌────────────────────────────────────┐
│  POINT DE DEPART     │   │ CALCUL DU POINT  DE  DEPART         │ ～5
│  • phases = 0        │   │ POUR L'OPTIMISATION  EN  SUIVANT    │
│  • atténuations = 1  │   │ LA METHODE DE LA MATRICE DE BUTLER  │
│                      │   │ INVERSE, UN GROUPE  A  LA  FOIS     │
└─────────────────────┘   └────────────────────────────────────┘
         4                                                  
                          6                         7
┌────────────────────────────────────┐   ┌────────────────────────┐
│  DEPART DE L'OPTIMISATION           │   │ • La solution est      │
│  ET AJUSTEMENT DES CIRCUITS         │   │   le point de départ   │
│  SUR LES VALEURS TROUVEES           │   │ • Pas d'optimisation   │
│                                     │   │   nécessaire           │
└────────────────────────────────────┘   └────────────────────────┘
```